# EUROPEAN PATENT SPECIFICATION

(11) **EP 2 317 587 B1**
(45) Date of publication and mention of the grant of the patent: **13.05.2015**
(21) Application number: 10251580.6
(22) Date of filing: 10.09.2010
(51) Int. Cl.: H01M 2/10, H01M 2/14, H01M 2/18, H01M 10/617, H01M 10/654, H01M 10/6555, H01M 10/04

(54) **Rechargeable battery**
Wiederaufladbare Batterie
Batterie rechargeable

(30) Priority: 29.10.2009 US 256023 P; 27.08.2010 US 870662
(43) Date of publication of application: 04.05.2011
(73) Proprietor: Samsung SDI Co., Ltd., Yongin-si, Gyeonggi-do (KR)
(72) Inventor: Lee, Myung-Ro, Yongin-si Gyeonggi-do (KR); Ryu, Myoung-Han, Yongin-si Gyeonggi-do (KR)
(74) Representative: Mounteney, Simon James

(56) References cited:
- JP-A- 2000 100 401
- JP-A- 2008 135 374
- JP-A- 2008 210 729
- US-A1- 2007 190 405
- US-A1- 2007 264 562
- US-B2- 7 332 244

## Description

### BACKGROUND OF THE INVENTION

### (a) Field of the Invention

The present invention relates to a rechargeable battery. More particularly, the present invention relates to a rechargeable battery that embodies a high-capacity.

### (b) Description of the Related Art

As is well known, a rechargeable battery can charge and discharge, unlike a primary battery.

To form a rechargeable battery of a predetermined capacity, it is advantageous to use a cylindrical cell of a large size rather than to use several cylindrical cells of a small size in order to minimize the need for circuit components or parts that connect cells. However, when forming a relatively large cylindrical cell, various problems can occur. For example, when spiral-winding an electrode group into a jelly roll form, a large number of windings is required as compared with manufacturing a low-capacity rechargeable battery.

As the number of spiral windings increases, it is also necessary to increase a width difference between the positive electrode and the negative electrode, so that a safe cylindrical cell can be formed. However, increasing the width difference between the positive electrode and the negative electrode also reduces the capacity of the rechargeable battery.

Furthermore, in a large cylindrical cell, because the electrode group has a high-capacity, the explosion force of the cylindrical cell increases and thus the rechargeable battery can be unsafe.

Uemoto et al (US 7,332,244) discloses a battery case formed by juxtaposing a plurality of electrode plate group housing chambers. The battery case further comprises side plates arranged in abutment with each face of the battery case.

Hidetoshi (JP2008210729) discloses a lithium secondary battery comprising a plurality of electrode wound bodies and a separator therebetween.

### SUMMARY OF THE INVENTION

The present invention has been made in an effort to provide a rechargeable battery that avoids the safety problems of a high-capacity electrode group, that reduces circuit device and parts requirements, that prevents cell swelling, and prevents displacement of an electrolyte solution.

Accordingly the invention provides a rechargeable battery as set out in Claim 1. Preferred features of the invention are set out in Claims 2 to 16.

According to an embodiment of the present invention, because a plurality of electrode assemblies are housed within a housing, it is possible to minimise the width difference between a positive electrode and a negative electrode within each electrode assembly. Furthermore, the rechargeable battery can be embodied with high-capacity, and with relatively few circuit devices and parts that connect the rechargeable battery from the outside. Even if the rechargeable battery has high-capacity, safety of the electrode group is maintained, and shell swelling of the kind that occurs in a conventional square-shaped rechargeable battery can be prevented.

Furthermore, by interposing a spacer between the electrode assemblies, the electrode assemblies are prevented from being shaken as each electrode assembly is securely fixed within the housing and displacement of electrolyte solution can be prevented in an internal space of the housing.

### BRIEF DESCRIPTION OF THE DRAWINGS

FIG. 1 is a perspective view of a rechargeable battery according to a first embodiment of the present invention.
FIG. 2 is an exploded perspective view of the rechargeable battery of FIG. 1.
FIG. 3 is an exploded perspective view of an electrode group.
FIG. 4 is a cross-sectional view of the rechargeable battery taken along line IV-IV of FIG. 1.
FIG. 5 is a cross-sectional view of the rechargeable battery taken along line V-V of FIG. 1.
FIG. 6 is a perspective view of a spacer that is applied to the first embodiment.
FIG. 7 is an exploded perspective view of a rechargeable battery according to a second embodiment of the present invention.
FIG. 8 is an exploded perspective view of a rechargeable battery according to a third embodiment of the present invention.

### <Description of Reference Numerals Indicating Primary Elements in the

### DETAILED DESCRIPTION OF THE EMBODIMENTS

The present invention will be described more fully hereinafter with reference to the accompanying drawings, in which embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

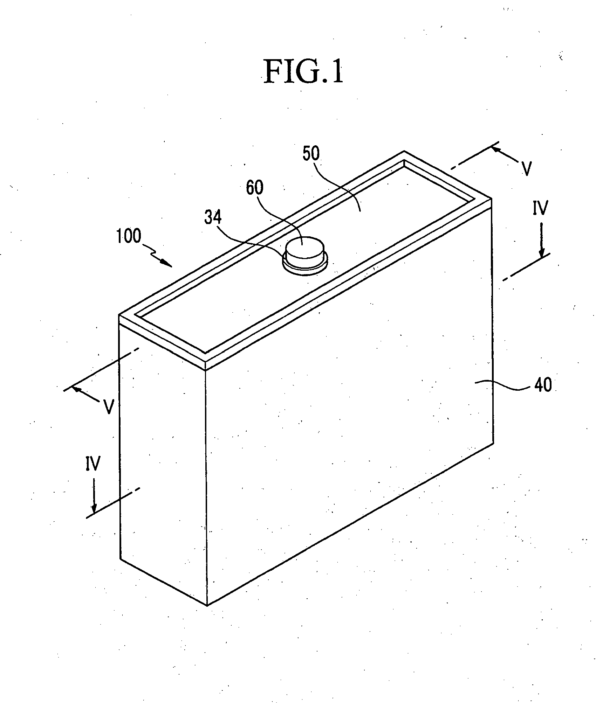

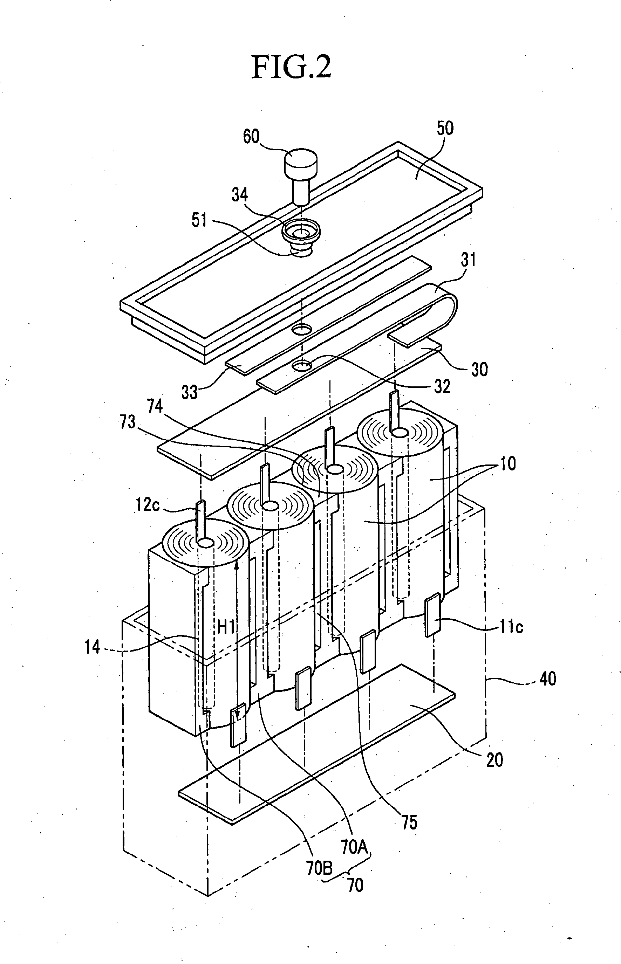

FIG. 1 is a perspective view of a rechargeable battery according to a first embodiment of the present invention, and FIG. 2 is an exploded perspective view of the rechargeable battery of FIG. 1. Referring to FIGS. 1 and 2, the rechargeable battery 100 includes a plurality of electrode assemblies 10, a first current collecting plate 20 (hereinafter, referred to as a "lower current collecting plate"), a second current collecting plate 30 (hereinafter, referred to as an "upper current collecting plate"), a can 40, a cap plate 50, an electrode terminal 60, and a spacer 70. The can 40 is a type of housing. Other types of housing can be used in alternative embodiments of the invention.

The rechargeable battery 100 houses a plurality of electrode assemblies 10 within the can 40. Because the rechargeable battery 100 couples a plurality of low-capacity electrode assemblies 10 in parallel, the rechargeable battery 100 can sustain safety without danger of explosion while embodying high-capacity.

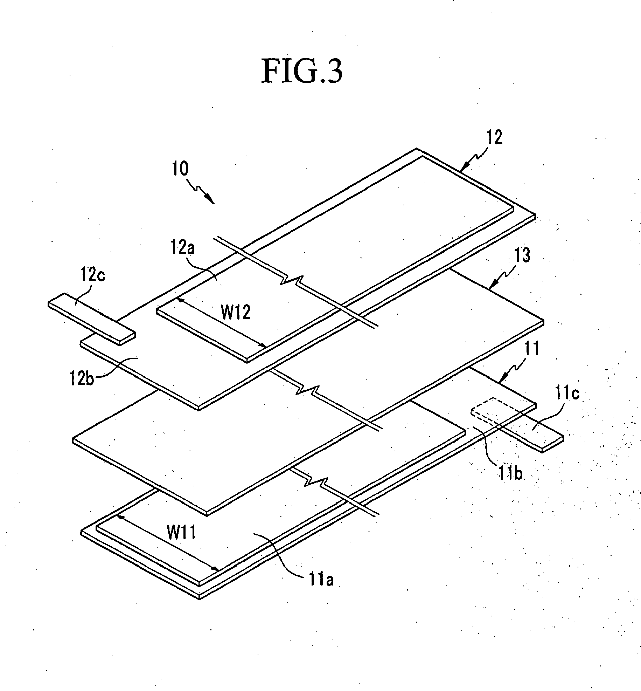

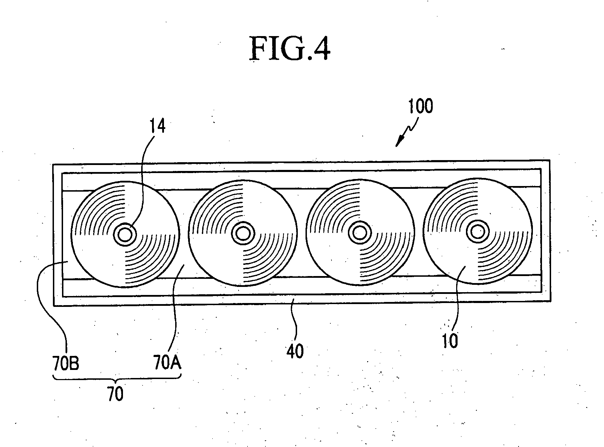

FIG. 3 is an exploded perspective view of an electrode assembly, and FIG. 4 is a cross-sectional view of the rechargeable battery taken along line IV-IV of FIG. 1. Referring to FIGS. 3 and 4, the electrode assembly 10 is formed in a jelly roll form by spiral-winding together a negative electrode 11, an positive electrode 12, and a separator 13, which is an insulating material that is disposed therebetween. The electrode assembly 10 is formed in a cylindrical shape. A sector pin 14 is disposed at the center of the cylindrical electrode assembly 10, and the sector pin 14 sustains the cylindrical shape of the electrode assembly 10 (see FIG. 4).

The negative electrode 11 and the positive electrode 12 form a current collector with a thin plate metal foil and include coating regions 11 a and 12a, respectively, in which an active material is coated in the current collector, and uncoated regions 11 b and 12b, respectively, in which an active material is not coated in the current collector. That is, the uncoated regions 11 b and 12b are formed at opposite ends of the coating regions 11 a and 12a, respectively.

A first lead tab 11 c (hereinafter, referred to as a "negative electrode lead tab") is connected to the uncoated region 11 b of the negative electrode 11, and a second lead tab 12c (hereinafter, referred to as an "positive electrode lead tab") is connected to the uncoated region 12b of the positive electrode 12.

Therefore, in the cylindrical electrode assembly 10 that is formed by spiral-winding together the negative electrode 11, the positive electrode 12, and the separator 13, the negative electrode lead tab 11c protrudes from an outer surface of the electrode assembly 10 to one side (lower side), and the positive electrode lead tab 12c protrudes from the center of the electrode assembly 10 to an opposite side (upper side) of the negative electrode lead tab 11c (see FIG. 2).

Further, because a plurality of electrode assembly 10 are disposed within the can 40, the electrode assemblies 10 are each formed as a cylinder having a volume that is smaller than the entire internal space of the can 40.

Safety of the rechargeable battery 100 demands that the coating region 12a of the positive electrode 12 and the coating region 11a of the negative electrode 11 are prevented from being short-circuited. For this purpose, a width W12 of the coating region 12a of the positive electrode 12 is formed smaller than a width W11 of the coating region 11 a of the negative electrode 11 (W12<W11). As the number of spiral windings of the electrode assembly 10 is reduced, the width difference W11-W12 that is required to sustain safety of the rechargeable battery 100 is also reduced. Because the present invention has a plurality of assemblies, each of which has relatively few windings, the width difference W11-W12 is minimized and this means that safety can be maintained whilst avoiding a reduction in capacity of the battery.

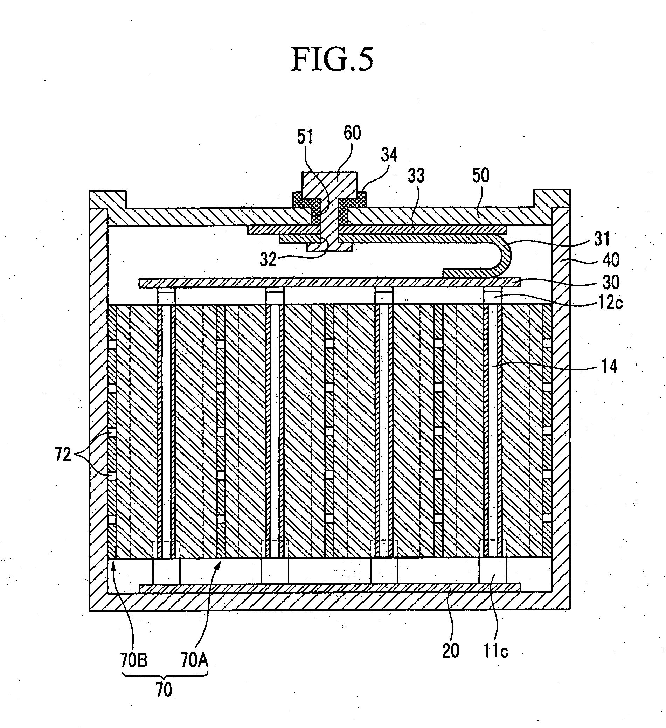

FIG. 5 is a cross-sectional view of the rechargeable battery taken along line V-V of FIG. 1. Referring to FIG. 5, in each of the electrode assemblies 10, the negative electrode lead tabs 11c protrude to a lower part of the electrode assemblies 10 to be connected by welding to the lower current collecting plate 20 that is disposed at the lower part of the electrode groups 10.

The positive electrode lead tabs 12c protrude to an upper part of the electrode assemblies 10 to be connected by welding to the upper current collecting plate 30 that is disposed at an upper part of the electrode assemblies 10. That is, a plurality of electrode assemblies 10 are coupled in parallel by the lower current collecting plate 20 and the upper current collecting plate 30 to embody high-capacity.

The can 40 is formed in a rectangular parallelepiped shape having one side opened to house the plurality of electrode assemblies 10. Further, because the can 40 has a space that can allow a plurality of low-capacity cylindrical electrode assemblies 10 to be inserted therein, the can 40 allows a high-capacity rechargeable battery 100 to be formed. Therefore, when connecting the plurality of electrode assemblies 10, parts or a circuit device can be reduced and cell swelling can be prevented.

The spacer 70 is interposed between the electrode assemblies 10 that are coupled in parallel to spatially separate the neighboring electrode assemblies 10, and when inserting the electrode assemblies 10, or in a state where the electrode assemblies 10 are inserted into the can 40, the spacer 70 fixes the electrode assemblies 10. Further, a spacer 70 is provided at the outermost part of a row of the electrode assemblies 10 to spatially separate the electrode assemblies 10 and the can 40 and more securely fix the electrode assemblies 10 in a state where the electrode assemblies 10 are inserted into the can 40.

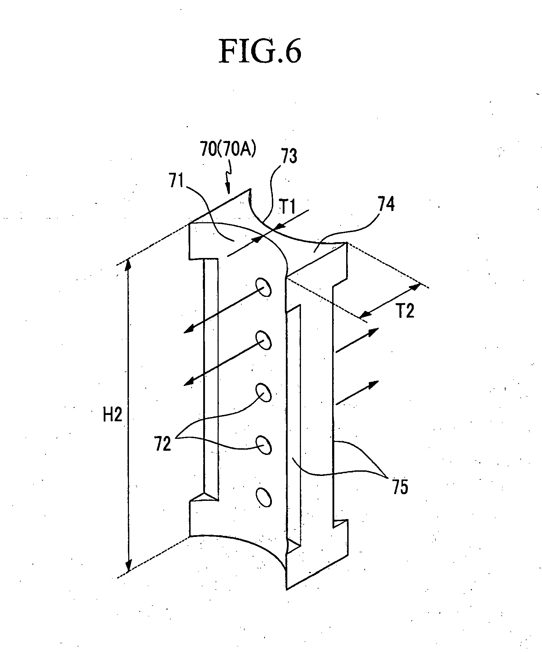

FIG. 6 is a perspective view of a spacer that is employed in the first embodiment. Referring to FIG. 6, the spacer 70 has a curved portion 71 that has a height H2 of which at least a part contacts with a height H1 of the electrode assemblies 10 and that supports a cylindrical outer surface of the electrode assemblies 10 by occupying space that is set between neighboring cylindrical electrode assemblies 10. In the first exemplary embodiment, the height H1 of the electrode assemblies 10 and the height H2 of the spacer 70 are the same.

A first spacer 70A that is disposed between neighboring electrode assemblies 10 among the spacers 70 has the curved portion 71 at both surfaces (see FIGS. 4 and 6), and a second spacer 70B that is disposed between an inner side surface of the can 40 and the outermost electrode assembly 10 has a curved portion 71 at one surface and has another one surface that is formed in a plane corresponding to an inner side surface of the can 40 (see FIGS. 2 and 4).

The spacer 70 has flow holes 72 that are separated in a height H2 direction in the curved portion 71. One flow hole 72 may be formed in a lower part of the spacer 70, but in this embodiment, a plurality of flow holes 72 are formed. Each flow hole 72 forms a flow passage for an electrolyte solution between the electrode assemblies 10 that are partitioned by the spacer 70 within the can 40. Therefore, the spacer 70 guides a flow of electrolyte solution between the electrode assemblies 10, thereby preventing an electrolyte solution from becoming displaced and trapped at one side between the electrode assemblies 10.

The spacer 70 has a central portion 73 of the curved portion 71 that is set to a thin first thickness T1 and an outer portion 74 of the curved portion 71 that is set to a second thickness T2 that is larger than the first thickness T1 in a row direction of the electrode assemblies 10 according to a disposition of the cylindrical electrode assemblies 10. The spacer is therefore generally wedge-shaped in cross-section in this region.

Because the spacer 70 is interposed between the neighboring electrode assemblies 10, the spacer 70 intercepts heat dissipation between the electrode assemblies 10. It is preferable that the spacer 70 minimizes heat dissipation interception between the electrode assemblies 10. In order to increase heat dissipation of the electrode assemblies 10, the spacer 70 forms a heat dissipating portion 75 having an outer portion 74 that is partially cut away. The heat dissipating portion 75 minimizes interception of an outer surface of the electrode assemblies 10 by the spacer 70 and increases exposure of an outer surface.

In the first embodiment, the heat dissipating portion 75 is formed in a straight line in a height H2 direction of the spacer 70, but a structure of the heat dissipating portion 75 is not limited thereto and the heat dissipating portion 75 can be formed in various structures such as in a curved line and with protrusions and depressions to increase exposure of an outer surface of the electrode assemblies 10 (not shown).

Further, in the spacer 70, because the heat dissipating portion 75 is formed at the center of a height H2 direction of the outer portion 74, the heat dissipating portion 75 supports the electrode groups 10 by both ends of the height H2 direction of the outer wall portion 74, thereby improving heat dissipation performance within a range that does not weaken the support of the electrode assemblies 10.

The spacer 70 can be formed from a synthetic resin having excellent formability, workability, electric insulating property, and thermal resistance. For example, the spacer 70 may be formed from a resin such as polypropylene (PP), polyethylene (PE), polyethyleneterephthalate (PET), and polyimide (PI).

When the electrode assemblies 10 are inserted into the can 40, by interposing the first spacer 70A between the electrode assemblies 10 and providing the second spacer 70B at the outermost part of a row of the electrode assemblies 10, the electrode assemblies 10 are inserted together with the first and second spacers 70A and 70B.

In a state when the electrode assemblies 10 and the spacer 70 are inserted into the can 40, the can 40 is connected by welding to the lower current collecting plate 20. As in the first embodiment, when the negative electrode lead tab 11c is connected to the lower current collecting plate 20, the can 40 that is connected to the lower current collecting plate 20 functions as a negative electrode terminal in the rechargeable battery 100. Further, in the electrode assemblies 10, when the positive electrode lead tab is connected to the lower current collecting plate, the can that is connected to the lower current collecting plate functions as an positive electrode terminal in the rechargeable battery (not shown).

The can 40 can be formed from iron or an aluminum-based conductive metal. As in the first embodiment, when the can 40 is connected to the negative electrode 11 of the electrode assemblies 10 to function as a negative electrode terminal, the can 40 can be formed from iron. Further, when the can is connected to the positive electrode of the electrode assemblies to function as an positive electrode terminal, the can can be formed from an aluminum-based material having excellent conductivity of more than iron (not shown).

The cap plate 50 is coupled to an opened side of the can 40 through which the electrode assemblies 10 and the spacers 70 are inserted to close and seal the can 40 that houses the electrode assemblies 10 and an electrolyte solution.

The electrode terminal 60 is installed in the cap plate 50 to be connected to the positive electrode 12 of the electrode assemblies 10 within the can 40. The electrode terminal 60 is connected to the upper current collecting plate 30 through a connection member 31.

For example, one end of the connection member 31 is connected by welding to the upper current collecting plate 30 and by forming a penetration hole 32 in the other one end thereof, and the connection member 31 is electrically connected to the electrode terminal 60. That is, the electrode terminal 60 is electrically connected to the positive electrodes 12 of the electrode assemblies 10 through the connection member 31 and the upper current collecting plate 30.

Further, the cap plate 50 is electrically connected to the negative electrode 11 of the electrode assemblies 10 through the can 40. Therefore, the connection member 31 and the electrode terminal 60 that are electrically connected to the positive electrode 12 have a structure that is electrically insulated from the cap plate 50.

For example, a lower insulator 33 is interposed between the cap plate 50 and the connection member 31 to be electrically insulated from the connection member 31 and the cap plate 50. An upper insulator 34 is interposed between an upper surface of the cap plate 50 and the electrode terminal 60 and between an electrode terminal hole 51 of the cap plate 50 and the electrode terminal 60, electrically insulates the cap plate 50 and the electrode terminal 60, and electrically insulates the electrode terminal hole 51 and the electrode terminal 60.

Hereinafter, various further embodiments of the present invention will be described. In comparing the following embodiments with the first embodiment, identical constituent elements will be omitted, and only dissimilar constituent elements will be described hereinafter in detail.

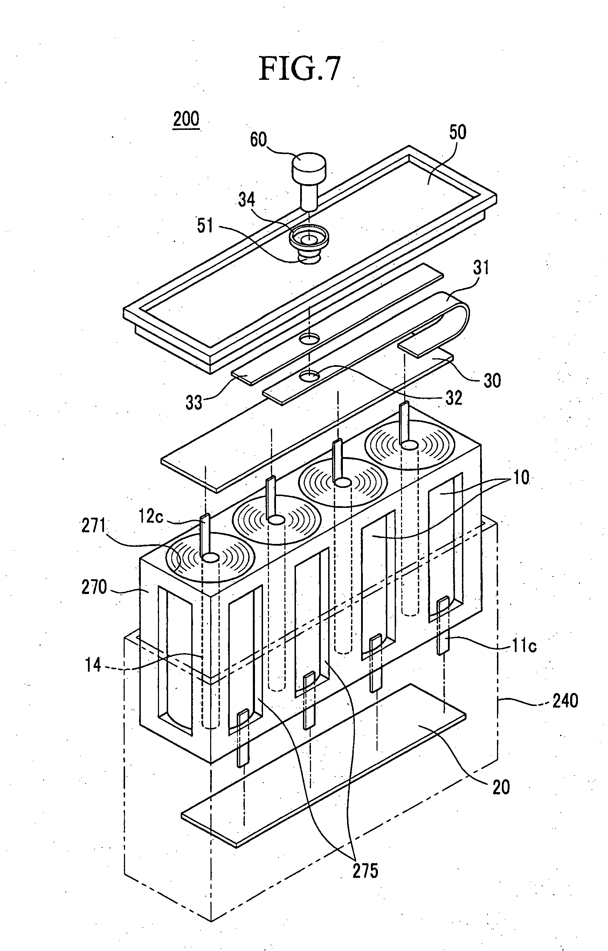

FIG. 7 is an exploded perspective view of a rechargeable battery according to a second embodiment of the present invention. The rechargeable battery 100 of the first embodiment includes a plurality of spacers 70 that are independently provided between the electrode assemblies 10. The rechargeable battery 200 of the second embodiment also includes spacers interposed between the electrode assemblies 10, however these spacers are connected together at the outer side of the electrode assemblies 10 by a frame 270, so as to form an integral structure.

Referring to FIG. 7, the external profile of the frame 270 is formed as a rectangular parallelepiped shape corresponding to the inner profile of a can 240, and has an insertion hole 271 that opens in an insertion direction (a vertical direction in FIG. 7) of the electrode assemblies 10 to enable insertion of the electrode assemblies 10.

Each of the electrode assemblies 10 is inserted into a respective insertion hole 271 of the frame 270, between the spacers. The frame 270 and the electrode assemblies 10 are then inserted into the can 240. The frame 270 of the second embodiment is integrally formed in a column direction of the electrode assemblies 10 so as to spatially separate the can 240 and the electrode assemblies 10, and securely fix the electrode assemblies 10 when inserting the electrode assemblies 10 into the can 240, or in a state where the electrode assemblies 10 are inserted into the can 240.

Because the frame 270 and spacers house the inserted electrode assemblies 10, the structure has a configuration that disturbs heat dissipation of the electrode assemblies 10. Therefore, the frame 270 includes heat dissipation holes 275 between the spacers to increase heat dissipation of the electrode assemblies 10. The heat dissipation holes 275 minimise interception of an outer surface of the electrode assemblies 10 by the frame 270, thereby increasing exposure .of an outer surface of the electrode assemblies 10.

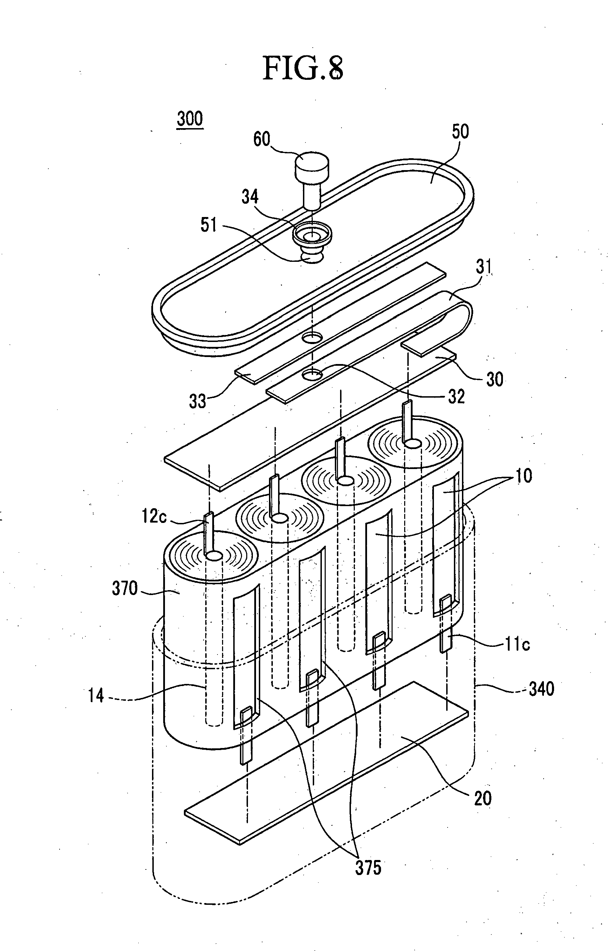

FIG. 8 is an exploded perspective view of a rechargeable battery according to a third embodiment of the present invention. The rechargeable battery 200 of the second embodiment includes the can 240 and the spacer 270 which each have rectangular parallelepiped shape. The rechargeable battery 300 of the third embodiment includes a can 340 and a spacer 370 having a modified rectangular parallelepiped shape.

As shown in the third embodiment, by forming both ends of the frame 370 with a curved surface corresponding to the outer profile of the electrode assemblies 10, the can 340 and the frame 370 have a modified rectangular parallelepiped shape.

Due to its shape, the rechargeable battery 300 of the third embodiment can be formed with a volume smaller than the rechargeable batteries 100 and 200 of the first and second embodiments.

Further, the frame 370 includes heat dissipation holes 375 between the electrode assemblies 10. The heat dissipation holes 375 minimise interception of an outer surface of the electrode assemblies 10 by the frame 370, thereby increasing exposure of an outer surface of the electrode assemblies 10.

## Claims

1. A rechargeable battery (100), comprising:
a plurality of electrode assemblies (10);
a spacer (70); and
a housing (40), which accommodates the electrode assemblies and the spacer;
wherein the spacer (70) is positioned between two adjacent said electrode assemblies (10) or between an inner surface of the housing (40) and one of the electrode assemblies (10); and wherein the spacer (70) has a non-planar surface portion that addresses an outer surface portion of one of the electrode assemblies(10);
**characterized in that** the spacer has at least one flow hole (72) for allowing electrolyte solution to flow therethrough.

2. A rechargeable battery according to Claim 1, wherein at least one of the electrode assemblies (10) is cylindrical and has a substantially circular cross section.

3. A rechargeable battery according to Claim 1 or 2, wherein the non-planar surface portion of the spacer is curved (71).

4. A rechargeable battery according to Claim 3 when dependent upon Claim 2, wherein the spacer (70) has a radius of curvature that is substantially the same as the radius of a said electrode assembly (10) that has a substantially circular cross-section.

5. A rechargeable battery according to any preceding claim, comprising a plurality of said flow holes (72) arranged at intervals in a height direction of the spacer.

6. A rechargeable battery according to any preceding claim, wherein the said spacer (70) has an outer portion (74) having a substantially wedge-shaped cross-section, the said outer portion (74) extending outwardly from a region of closest proximity between two electrode assemblies (10) or an electrode assembly (10) and an inner surface of the housing.

7. A rechargeable battery according to Claim 6, wherein the outer portion (74) comprises a heat dissipating portion (75).

8. A rechargeable battery according to claim 7, wherein the heat dissipating portion (75) takes the form of a recess in an outer edge region of the outer portion.

9. A rechargeable battery according to any preceding claim wherein the spacer (70) has a height which is substantially the same as or greater than the electrode assemblies (10).

10. A rechargeable battery according to any preceding claim, comprising a plurality of said spacers (70).

11. A. rechargeable battery according to Claim 10, wherein at least two said spacers (70) are connected together.

12. A rechargeable battery according to Claim 11, wherein the said spacers are connected together via an outer frame member.

13. A rechargeable battery according to Claim 12, wherein the outer frame member (270) is integrally formed with all of the said spacers.

14. A rechargeable battery according to Claim 12 or 13, wherein the outer frame member has an outer profile that matches an inner profile of the housing.

15. A rechargeable battery according to Claim 12 or 13, wherein the outer frame member (270) has an outer profile that at least partially follows the outer profile of the electrode assemblies (10).

16. A rechargeable battery according to any preceding claim, wherein the spacer (70) is made from a synthetic resin.

## Patentansprüche

1. Wiederaufladbare Batterie (100), umfassend:
eine Mehrzahl von Elektrodenanordnungen (10);
einen Abstandhalter (70); und
ein Gehäuse (40), das die Elektrodenanordnungen und den Abstandhalter beherbergt;
wobei der Abstandhalter (70) zwischen zwei benachbarten der Elektrodenanordnungen (10) oder zwischen einer inneren Oberfläche des Gehäuses (40) und einer der Elektrodenanordnungen (10) positioniert ist; und wobei der Abstandhalter (70) einen unebenen Oberflächenabschnitt aufweist, der sich an einen äußeren Oberflächenabschnitt einer der Elektrodenanordnungen (10) richtet;
**dadurch gekennzeichnet, dass** der Abstandhalter zumindest ein Strömungsloch (72) zum Hindurchströmen von Elektrolytlösung aufweist.

2. Wiederaufladbare Batterie nach Anspruch 1, wobei zumindest eine der Elektrodenanordnungen (10) zylindrisch ist und einen im Wesentlichen kreisförmigen Querschnitt aufweist.

3. Wiederaufladbare Batterie nach Anspruch 1 oder 2, wobei der unebene Oberflächenabschnitt des Abstandhalters gekrümmt (71) ist.

4. Wiederaufladbare Batterie nach Anspruch 3 bei Abhängigkeit von Anspruch 2, wobei der Abstandhalter (70) einen Krümmungsradius aufweist, der im Wesentlichen gleich dem Radius einer Elektrodenanordnung (10) ist, die einen im Wesentlichen kreisförmigen Querschnitt aufweist.

5. Wiederaufladbare Batterie nach einem der vorangehenden Ansprüche, umfassend eine in Abständen in einer Höhenrichtung des Abstandhalters angeordnete Mehrzahl der Strömungslöcher (72).

6. Wiederaufladbare Batterie nach einem der vorangehenden Ansprüche, wobei der Abstandhalter (70) einen äußeren Abschnitt (74) mit einem im Wesentlichen keilförmigen Querschnitt aufweist, wobei sich der äußere Abschnitt (74) von einem Bereich der größten Nähe zwischen zwei Elektrodenanordnungen (10) oder einer Elektrodenanordnung (10) und einer inneren Oberfläche des Gehäuses nach außen erstreckt.

7. Wiederaufladbare Batterie nach Anspruch 6, wobei der äußere Abschnitt (74) einen Wärmeableitungsabschnitt (75) umfasst.

8. Wiederaufladbare Batterie nach Anspruch 7, wobei der Wärmeableitungsabschnitt (75) die Form einer Aussparung in einem äußeren Randbereich des äußeren Abschnitts annimmt.

9. Wiederaufladbare Batterie nach einem der vorangehenden Ansprüche, wobei der Abstandhalter (70) eine Höhe aufweist, die im Wesentlichen mit den Elektrodenanordnungen (10) übereinstimmt oder größer als diese ist.

10. Wiederaufladbare Batterie nach einem der vorangehenden Ansprüche, umfassend eine Mehrzahl der Abstandhalter (70).

11. Wiederaufladbare Batterie nach Anspruch 10, wobei zumindest zwei der Abstandhalter (70) miteinander verbunden sind.

12. Wiederaufladbare Batterie nach Anspruch 11, wobei die Abstandhalter über ein äußeres Rahmenglied miteinander verbunden sind.

13. Wiederaufladbare Batterie nach Anspruch 12, wobei das äußere Rahmenglied (270) mit allen Abstandhaltern einstückig ausgebildet ist.

14. Wiederaufladbare Batterie nach Anspruch 12 oder 13, wobei das äußere Rahmenglied ein äußeres Profil aufweist, das zu einem inneren Profil des Gehäuses passt.

15. Wiederaufladbare Batterie nach Anspruch 12 oder 13, wobei das äußere Rahmenglied (270) ein äußeres Profil aufweist, das zumindest teilweise dem äußeren Profil der Elektrodenanordnungen (10) folgt.

16. Wiederaufladbare Batterie nach einem der vorangehenden Ansprüche, wobei der Abstandhalter (70) aus einem Kunstharz hergestellt ist.

## Revendications

1. Batterie rechargeable (100), comprenant :
une pluralité d'ensembles d'électrodes (10) ;
une entretoise (70) ; et
un boîtier (40), qui reçoit les ensembles d'électrodes et l'entretoise ;
dans laquelle l'entretoise (70) est positionnée entre deux ensembles adjacents parmi lesdits ensembles d'électrodes (10) ou entre une surface interne du boîtier (40) et l'un des ensembles d'électrodes (10) ; et où l'entretoise (70) a une partie de surface non plane qui adresse une partie de surface externe de l'un des ensembles d'électrodes (10) ;
**caractérisée en ce que** l'entretoise a au moins un trou d'écoulement (72) pour permettre à une solution électrolytique de s'écouler à travers celui-ci.

2. Batterie rechargeable selon la revendication 1, dans laquelle au moins l'un des ensembles d'électrodes (10) est cylindrique et a une section transversale essentiellement circulaire.

3. Batterie rechargeable selon la revendication 1 ou 2, dans laquelle la partie de surface non plane de l'entretoise est incurvée (71).

4. Batterie rechargeable selon la revendication 3 lorsqu'elle dépend de la revendication 2, dans laquelle l'entretoise (70) a un rayon de courbure qui est essentiellement le même que le rayon dudit ensemble d'électrodes (10) qui a une section transversale essentiellement circulaire.

5. Batterie rechargeable selon l'une des revendications précédentes, comprenant une pluralité desdits trous d'écoulement (72) agencés à des intervalles dans une direction de la hauteur de l'entretoise.

6. Batterie rechargeable selon l'une des revendications précédentes, dans laquelle ladite entretoise (70) a une partie externe (74) ayant une section transversale essentiellement en forme de coin, ladite partie externe (74) s'étendant vers l'extérieur à partir d'une zone de proximité immédiate entre deux ensembles d'électrodes (10) ou un ensemble d'électrodes (10) et une surface interne du boîtier.

7. Batterie rechargeable selon la revendication 6, dans laquelle la partie externe (74) comprend une partie de dissipation de chaleur (75).

8. Batterie rechargeable selon la revendication 7, dans laquelle la partie de dissipation de chaleur (75) prend la forme d'un évidement dans une zone de bord externe de la partie externe.

9. Batterie rechargeable selon l'une des revendications précédentes, dans laquelle l'entretoise (70) a une hauteur qui est essentiellement supérieure ou égale à celle des ensembles d'électrodes (10).

10. Batterie rechargeable selon l'une des revendications précédentes, comprenant une pluralité desdites entretoises (70).

11. Batterie rechargeable selon la revendication 10, dans laquelle au moins deux desdites entretoises (70) sont reliées ensemble.

12. Batterie rechargeable selon la revendication 11, dans laquelle lesdites entretoises sont reliées ensemble par l'intermédiaire d'un élément de cadre externe.

13. Batterie rechargeable selon la revendication 12, dans laquelle l'élément de cadre externe (270) est formé d'un seul tenant avec toutes lesdites entretoises.

14. Batterie rechargeable selon la revendication 12 ou 13, dans laquelle l'élément de cadre externe a un profil externe qui correspond à un profil interne du boîtier.

15. Batterie rechargeable selon la revendication 12 ou 13, dans laquelle l'élément de cadre externe (270) a un profil externe qui suit au moins partiellement le profil externe des ensembles d'électrodes (10).

16. Batterie rechargeable selon l'une des revendications précédentes, dans laquelle l'entretoise (70) est réalisée en une résine synthétique.
